# EUROPÄISCHE PATENTSCHRIFT

(11) **EP 2 956 639 B1**
(45) Veröffentlichungstag und Bekanntmachung des Hinweises auf die Patenterteilung: **16.01.2019**
(21) Anmeldenummer: 14701399.9
(22) Anmeldetag: 27.01.2014
(51) Int. Cl.: F01N 3/20, F01N 3/28

(54) **ABGASLEITUNGSABSCHNITT ZUR ZUFUHR VON FLÜSSIGEM ADDITIV**
EXHAUST GAS LINE SECTION FOR SUPPLYING LIQUID ADDITIVE
PARTIE DE CONDUITE DES GAZ D'ÉCHAPPEMENT PERMETTANT D'AMENER UN ADDITIF LIQUIDE

(30) Priorität: 14.02.2013 DE 102013101461
(43) Veröffentlichungstag der Anmeldung: 23.12.2015
(73) Patentinhaber: Continental Automotive GmbH, 30165 Hannover (DE)
(72) Erfinder: MÜLLER-HAAS, Klaus, 51103 Köln (DE)
(86) Internationale Anmeldenummer: PCT/EP2014/051495
(87) Internationale Veröffentlichungsnummer: WO 2014/124797

(56) Entgegenhaltungen:
- EP-A1- 2 090 761
- WO-A1-2006/097131
- WO-A1-2012/052690
- WO-A1-2013/127955
- DE-A1- 19 913 462

## Beschreibung

Die Erfindung betrifft einen Abgasleitungsabschnitt zur Zufuhr von flüssigem Additiv in eine Abgasbehandlungsvorrichtung. Ein derartiger Abgasleitungsabschnitt kann in einer Abgasleitung bzw. in einer Abgasbehandlungsvorrichtung angeordnet sein und wird beim Betrieb einer an die Abgasleitung bzw. an die Abgasbehandlungsvorrichtung angeschlossenen Verbrennungskraftmaschine vom Abgas durchströmt. Mit dem beschriebenen Abgasleitungsabschnitt kann einer Abgasströmung flüssiges Additiv zugeführt werden.

Abgasbehandlungsvorrichtungen, denen ein flüssiges Additiv zugeführt wird, sind weit verbreitet. In solchen Abgasbehandlungsvorrichtungen wird beispielsweise das Abgasreinigungsverfahren der selektiven katalytischen Reduktion [SCR-Verfahren; SCR = Selective Catalytic Reduction] durchgeführt. Bei diesem Verfahren werden Stickstoffoxidverbindungen im Abgas unter Zuhilfenahme eines Reduktionsmittels reduziert. Als Reduktionsmittel wird insbesondere Ammoniak eingesetzt. Ammoniak wird einer Abgasbehandlungsvorrichtung jedoch oft nicht direkt zugeführt, sondern in Form einer Reduktionsmittelvorläuferlösung. Diese Reduktionsmittelvorläuferlösung ist ein flüssiges Additiv, das einer Abgasströmung mit dem beschriebenen Abgasleitungsabschnitt zugeführt werden kann.

Für die Abgasreinigung wird als flüssiges Additiv besonders häufig Harnstoff-Wasser-Lösung eingesetzt. Eine Harnstoff-Wasser-Lösung mit einem Harnstoffgehalt von 32,5 Prozent ist unter dem Handelsnamen AdBlue® erhältlich.

Bei der Zugabe von flüssigem Additiv zur Abgasbehandlungsvorrichtung ist problematisch, dass das flüssige Additiv sehr leicht Ablagerungen in der Abgasbehandlungsvorrichtung bildet. Beispielsweise muss die Harnstoff-Wasser-Lösung bei der Zufuhr zu einer Abgasbehandlungsvorrichtung schnell verdampfen, damit keine kristallinen Harnstoffpartikel gebildet werden. Darüber hinaus ist bei der Zugabe eine gleichmäßige Verteilung des flüssigen Additivs in der Abgasströmung angestrebt. Durch eine gleichmäßige Verteilung des flüssigen Additivs kann die Bildung von Ablagerungen vermieden werden, weil keine örtlich begrenzte Anreicherung des Abgases mit flüssigem Additiv auftritt. Lokale Anreicherungen können zur Bildung größerer Additivtropfen führen, die nicht oder nur schwer verdampfen und die Bildung von Ablagerungen verstärken.

Zur Vermeidung von Ablagerungen sollte das flüssige Additiv bei der Zugabe insbesondere nicht mit einer Außenwand der Abgasbehandlungsvorrichtung in Kontakt kommen. Die Außenwand ist oft direkt mit der Umgebung in Kontakt, so dass diese von einer Außenseite her mit der Außentemperatur beaufschlagt. Die Außenwand ist demnach oft sehr viel kälter als andere Bereiche der Abgasbehandlungsvorrichtung, die von der Außenwand beabstandet sind. Daher kann flüssiges Additiv an der Wand der Abgasleitung kondensieren bzw. nicht (schnell genug) verdampfen und so häufig zu (nicht bzw. schwer entfernbaren) Ablagerungen führen.

Aus der WO 2012/052690 A1 ist eine Vorrichtung zur Zugabe eines Additivs in eine Abgasleitung bekannt. Hierbei wird das Additiv in ein separates Rohr eingebracht, das stromauf eines Katalysators und beabstandet zu dem Katalysator innerhalb der Abgasleitung angeordnet ist.

Aus der WO 2006/097131 A1 ist eine Wabenkörper bekannt, der in radialer Richtung mit unterschiedlichen Wabenstrukturen gebildet ist, die durch ein Zwischenrohr voneinander getrennt sind. Ferner sind Mittel zur Zugabe eines Reaktanden im Inneren des Zwischenrohrs vorgesehen.

Die Druckschrift DE 199 13 462 A1 offenbart ein Verfahren und eine Vorrichtung zur thermischen Hydrolyse und Dosierung von Harnstoff, wobei eine Zugabe von Reduktionsmittel in ein Abgassystem in einem Teilstrom des Abgases im Abgassystem erfolgt.

Aus der EP 2 090 761 A1 ist eine Abgasnachbehandlungsvorrichtung für die Nachbehandlung der Abgase einer Verbrennungskraftmaschine bekannt, in die ein gasförmiges Reduktionsmittel zugegeben wird.

Hiervon ausgehend ist es Aufgabe der hier vorliegenden Erfindung, die im Zusammenhang mit dem Stand der Technik geschilderten technischen Probleme zu lösen bzw. zumindest zu lindern. Es soll insbesondere ein besonders vorteilhafter Abgasleitungsabschnitt beschrieben werden, mit dem einer Abgasbehandlungsvorrichtung ein flüssiges Additiv zugeführt werden kann.

Diese Aufgaben werden gelöst mit einem Abgasleitungsabschnitt gemäß den Merkmalen des Patentanspruchs 1. Weitere vorteilhafte Ausgestaltungen sind in den abhängigen Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Vorgeschlagen wird demnach ein Abgasleitungsabschnitt, der von einem Abgas durchströmt werden kann, wobei entlang einer Durchströmungsrichtung hintereinander eine Strömungsleitstruktur, eine Zugabeeinheit zur Zufuhr eines flüssigen Additivs zu dem Abgas und eine durchströmbare Auftreffstruktur angeordnet sind, wobei die Strömungsleitstruktur eine Düse ist, wobei die Zugabeeinheit an einer seitlichen Öffnung des Abgasleitungsabschnitts angeordnet ist, wobei die Zugabeeinheit und die Strömungsleitstruktur so angeordnet und ausgebildet sind, dass ein Auftreffbereich des flüssigen Additivs auf der Auftreffstruktur mit dem Schwerpunkt einer Strömungsverteilung des die Auftreffstruktur durchströmenden Abgases überlappt, wobei eine Achse eines mittels der Zugabeeinheit erzeugbaren Sprühkegels auf die Auftreffstruktur hin ausgerichtet ist, wobei die Auftreffstruktur (5) ein Wabenkörper (19) mit für Abgas durchströmbaren Kanälen (20) ist, wobei in den Kanälen (20) Umlenkflächen (21) zur Beeinflussung einer Abgasströmung vorgesehen sind.

Der Abgasleitungsabschnitt ist vorzugsweise ein Rohr, welches einen Abschnitt einer Abgasleitung einer Abgasbehandlungsvorrichtung ausbildet und durch das das Abgas (als Abgasströmung) strömt. Der Abgasleitungsabschnitt hat vorzugsweise eine Außenwandung, die den Abgasleitungsabschnitt begrenzt, eine Einströmseite, durch die die Abgasströmung in den Abgasleitungsabschnitt eintritt, sowie eine Ausströmseite, durch die die Abgasströmung aus dem Abgasleitungsabschnitt austritt. Von der Einströmseite zur Ausströmseite erstreckt sich die Durchströmungsrichtung durch den Abgasleitungsabschnitt. Der Abgasleitungsabschnitt hat einen Querschnitt bzw. eine Querschnittsfläche, die insbesondere im Wesentlichen normal zu der Durchströmungsrichtung ausgerichtet ist. Der Abgasleitungsabschnitt hat vorzugsweise eine zylindrische Grundform, wobei die Außenwand die Umfangsfläche der zylindrischen Grundform bildet und die Einströmseite und die Ausströmseite jeweils von den Stirnseiten der zylindrischen Grundform gebildet sind. Damit, dass die Strömungsleitstruktur, die Zugabeeinheit und die Auftreffstruktur in Durchströmungsrichtung hintereinander angeordnet sind, ist insbesondere gemeint, dass diese drei Bauteile jeweils in einer zur Durchströmungsrichtung normal bzw. senkrecht ausgerichteten Ebene (Querschnittsebene) liegen, und die jeweiligen Querschnittsebenen der drei verschiedenen Komponenten in Durchströmungsrichtung hintereinander angeordnet sind.

Die Strömungsleitstruktur ist an der Einströmseite des Abgasleitungsabschnitts angeordnet. Die Strömungsleitstruktur beeinflusst die Abgasströmung, welche den Abgasleitungsabschnitt von der Einströmseite zur Ausströmseite durchströmt. Beispielsweise kann die Strömung von der Strömungsleitstruktur konzentriert, aufgeweitet und/oder zumindest teilweise umgelenkt werden. Die Strömungsleitstruktur ist insbesondere unmittelbar anschließend zur Einströmseite angeordnet und/oder bildet die erste Komponente des Abgasleitungsabschnitts. Die Strömungsleitstruktur ist insbesondere ein Einbauteil, also ein separates Bauteil, des Abgasleitungsabschnitts.

Die (mindestens eine) Zugabeeinheit zur Zufuhr eines flüssigen Additivs zu dem Abgasleitungsabschnitt umfasst vorzugsweise eine Düse. mit der das flüssige Additiv in den Abgasleitungsabschnitt eingedüst werden kann. Diese Düse ist ganz besonders bevorzugt eine Zerstäubungsdüse, die das flüssige Additiv bei der Zufuhr fein zerstäubt. Die Zugabeeinheit ist an einer (seitlichen) Öffnung des Abgasleitungsabschnitts angeordnet. Diese Öffnung durchdringt die Außenwand des Abgasleitungsabschnitts, so dass neben der Eintrittsöffnung und der Austrittsöffnung noch (mindestens) eine dritte Öffnung in der Außenwand des Abgasleitungsabschnitts vorgesehen ist, an der die Zugabeeinheit angeschlossen ist. Diese dritte Öffnung ist allerdings durch die Zugabeeinheit verschlossen. In einer Ausführungsvariante umfasst die Zugabeeinheit auch einen Injektor mit dem eine Dosierung des flüssigen Additivs möglich ist. Vorzugsweise hat der Injektor ein elektrisch öffnendes und schließendes Dosierventil und die zugeführte Menge an flüssigem Additiv kann über die Öffnungszeit des Injektors festgelegt werden. Die Zerstäubungsdüse schließt sich vorzugsweise unmittelbar an den Injektor an und erstreckt sich zumindest abschnittsweise in den Abgasleitungsabschnitt hinein. Bevorzugt ist weiter, dass die Zugabeeinheit an der Außenwand mündet, also insbesondere nicht oder nur minimal über die Außenwand nach innen hineinragt. Weiterhin ist bevorzugt, dass die Zugabeeinheit unmittelbar nachfolgend der Strömungsleitstruktur angeordnet ist, hier also keine weiteren Bauteile dazwischen angeordnet sind.

Die Auftreffstruktur ist nahe bzw. an der Ausströmseite des Abgasleitungsabschnittes angeordnet. Die durchströmbare Auftreffstruktur ist eine Struktur, auf die flüssiges Additiv trifft, welches von der Zugabeeinheit zu dem Abgas zugeführt wird. Die Auftreffstruktur überspannt vorzugsweise eine Querschnittsfläche des Abgasleitungsabschnitts vollständig. Eine Abgasströmung in dem Abgasleitungsabschnitt muss die Auftreffstruktur demnach durchströmen. Bevorzugt ist, dass die Auftreffstruktur unmittelbar nachfolgend der Zugabeeinheit angeordnet ist, hier also keine weiteren Bauteile dazwischen angeordnet sind. Bevorzugt ist ebenfalls, dass kein weiteres Bauteil hin zur Ausströmseite folgt, also die Auftreffstruktur das in Durchströmungsrichtung letzte Bauteil des Abgasleitungsabschnittes ist. Weiter ist bevorzugt, dass die Auftreffstruktur ein separates Bauteil innerhalb des Abgasleitungsabschnittes (eine Art Einbauteil) ist.

Der Auftreffbereich ist ein Bereich auf der Auftreffstruktur, auf die das flüssige Additiv trifft, wenn es dem Abgasleitungsabschnitt mit der Zugabeeinheit zugeführt wird. Der Auftreffbereich ist vorzugsweise an einer der Zugabeinheit zugewandten Oberfläche der Auftreffstruktur angeordnet. Diese Oberfläche kann in einen Auftreffbereich und einen peripheren Bereich aufgeteilt werden. Der periphere Bereich ist der Teil der Oberfläche der Auftreffstruktur, der nicht zum Auftreffbereich gehört. Der Auftreffbereich ist vorzugweise ein Bereich, der von einer Außenwand des Abgasleitungsabschnitts beabstandet ist. So kann vermieden werden, dass im Auftreffbereich auf die Auftreffstruktur auftreffendes flüssiges Additiv auch in Kontakt mit der Außenwand des Abgasleitungsabschnitts gelangt. Hierdurch könnten sich Ablagerungen bilden.

Der Auftreffbereich wird durch die Gestaltung und Betriebsweise der Zugabeeinheit sowie durch die räumliche Anordnung der Zugabeeinheit relativ zu der Auftreffstruktur vorgegeben. Die Zugabeeinheit wird vorzugsweise mit einem vorgegebenen Druck betrieben. Hiermit ist gemeint, dass die Zugabeeinheit von einer Fördereinheit mit flüssigem Additiv versorgt wird, welches unter einem vorgegebenen Druck steht. Eine Düse der Zugabeinheit hat vorzugsweise einen vorgegebenen Sprühkegel. Die Gestalt des vorgegebenen Sprühkegels ist regelmäßig von dem vorgegebenen Druck abhängig. Die Düse zerstäubt das flüssige Additiv bei der Zufuhr und es bildet sich in dem Abgasleitungsabschnitt der vorgegebene Sprühkegel von flüssigem Additiv aus. Der vorgegebene Sprühkegel hat eine bestimmte Ausrichtung und einen bestimmten Aufweitungswinkel. Dieser Aufweitungswinkel kann beispielsweise zwischen 5 und 30° [Winkelgrad] betragen. Die Ausrichtung des Sprühkegels kann durch eine (zentrale) Achse des Sprühkegels beschrieben werden. Die Achse des Sprühkegels ist vorzugsweise auf die Auftreffstruktur hin ausgerichtet. Wenn die Ausrichtung bzw. die Achse des Sprühkegels und der Aufweitungswinkel entsprechend festgelegt sind und die Auftreffstruktur in dem Abgasleitungsabschnitt entsprechend angeordnet ist, bildet sich der Auftreffbereich für das flüssige Additiv auf der Auftreffstruktur entsprechend aus.

Die Zugabeinheit und die Strömungsleitstruktur sind so ausgebildet, dass der Auftreffbereich des flüssigen Additivs auf der Auftreffstruktur mit dem Schwerpunkt einer Strömungsverteilung des die Auftreffstruktur durchströmenden Abgases überlappt. Die Strömungsverteilung durchströmt die Auftreffstruktur und/oder die Auftreffstruktur wird von der Strömungsverteilung angeströmt. Der Schwerpunkt der Strömungsverteilung ist ein Schwerpunkt einer Geschwindigkeitsverteilung der Strömung in einer Querschnittsfläche des Abgasleitungsabschnittes, in der auch der Auftreffbereich auf der Auftreffstruktur liegt. Der Schwerpunkt der Strömungsverteilung kann mit dem Punkt in der Querschnittsfläche übereinstimmen, an dem die größte Abgasströmungsgeschwindigkeit vorliegt, wenn eine Abgasströmung den Abgasleitungsabschnitt durchströmt. Damit, dass der Auftreffbereich und der Schwerpunkt der Strömungsverteilung überlappen, ist gemeint, dass der Schwerpunkt in dem Auftreffbereich liegt.

Der Auftreffbereich hat ebenfalls einen Schwerpunkt. Vorzugsweise ist der Schwerpunkt des Auftreffbereiches der Flächenschwerpunkt der Fläche des Auftreffbereiches. Die Verteilung des flüssigen Additivs auf die Fläche des Auftreffbereiches kann gleichmäßig sein. Dann ist die auf die Fläche bezogene Menge an flüssigem Additiv, die auf den Auftreffbereich trifft, an jeder Stelle des Auftreffbereiches gleich. Es ist auch möglich, dass das flüssige Additiv im Auftreffbereich ungleichmäßig verteilt ist. Beispielsweise kann die auf die Fläche bezogene Menge an flüssigem Additiv, die auf den Auftreffbereich trifft, bereichsweise größer sein als in anderen Bereichen des Auftreffbereiches. Unter diesen Bedingungen kann der Schwerpunkt des Auftreffbereiches vom Flächenschwerpunkt der Fläche des Auftreffbereiches abweichen. Gemäß einer bevorzugten Ausführungsvariante liegen der Schwerpunkt des Auftreffbereiches und der Schwerpunkt der Strömungsverteilung an der Auftreffstruktur übereinander. Hiermit ist insbesondere gemeint, dass die Schwerpunkte einen Abstand von weniger als 10 mm [Millimeter], besonders bevorzugt sogar weniger als 5 mm, zueinander aufweisen.

Die Zugabeeinheit kann an einer Ausbuchtung des Abgasleitungsabschnitts angeordnet sein. Mit einer Ausbuchtung ist hier ein Bereich des Abgasleitungsabschnitts gemeint, welcher von einer zylindrischen Grundform des Rohrleitungsabschnittes nach außen hin abweicht und so das Volumen des Abgasleitungsabschnitts vergrößert.

Die Zugabeeinheit kann auch an einer Einbuchtung des Abgasleitungsabschnitts angeordnet sein. Eine Einbuchtung ist eine Einstülpung der Wand des Abgasleitungsabschnitts, die das Volumen des Abgasleitungsabschnitts verkleinert und von einer zylindrischen Grundform des Abgasleitungsabschnitts somit ebenfalls abweicht. Durch eine Fokussierung des Abgases entsprechend einer Strömungsverteilung, die einem Auftreffbereich entspricht, entsteht ein peripherer Bereich um den Auftreffbereich herum. In diesem peripheren Bereich treten nur niedrige Abgasströmungsgeschwindigkeiten auf. Eine Einbuchtung in diesem Bereich behindert die Abgasströmung nicht oder nur sehr wenig. Durch die Einbuchtung tritt ein Abschnitt der Zugabeeinheit, der außerhalb des Abgasleitungsabschnittes angeordnet ist nicht oder nur wenig über die zylindrische Grundform des Abgasleitungsabschnittes hervor. Daher ermöglicht eine Einbuchtung einen sehr kompakten Abgasleitungsabschnitt mit einer Zugabeeinheit.

Der beschriebene Abgasleitungsabschnitt ermöglicht es einerseits, dass Ablagerungen von flüssigem Additiv im Bereich einer Zugabeeinheit für flüssiges Additiv wirkungsvoll vermieden werden. Einerseits trifft das flüssige Bereich nur in einem klar begrenzten Bereich innerhalb des Abgasleitungsabschnitts (dem Auftreffbereich) auf eine Struktur auf. Gleichzeitig wird durch die entsprechend vorgesehene Strömungsverteilung ein schneller und effektiver Abtransport des flüssigen Additivs im Auftreffbereich verwirklicht. Die Strömungsverteilung bewirkt, dass die Abgasströmung das flüssige Additiv besonders wirkungsvoll und/oder schnell verdampft, chemisch umsetzt und/oder abtransportiert.

Besonders bevorzugt sind die Zugabeeinheit und die Strömungsleitstruktur so angeordnet und ausgebildet, dass der Auftreffbereich der Strömungsverteilung entspricht.

Die Strömungsverteilung entspricht insbesondere dann dem Auftreffbereich, wenn die Strömungsgeschwindigkeit und/oder der auf die Fläche bezogene Massenstrom der Abgasströmung im Auftreffbereich signifikant von der Strömungsgeschwindigkeit oder dem flächenbezogenen Massenstrom der Abgasströmung außerhalb des Auftreffbereichs abweicht. Vorzugsweise strömt das Abgas im Auftreffbereich mit einer ersten Abgasströmungsgeschwindigkeit, während das Abgas außerhalb des Auftreffbereichs (im peripheren Bereich der Auftreffstruktur) mit einer zweiten (davon signifikant verschiedenen) Abgasströmungsgeschwindigkeit strömt. Die erste Abgasströmungsgeschwindigkeit und die zweite Abgasströmungsgeschwindigkeit sind jeweils auf die Fläche bezogen mittlere Strömungsgeschwindigkeiten, die das Abgas in den jeweiligen Bereichen (dem Auftreffbereich und dem peripheren Bereich) hat. Die erste Abgasströmungsgeschwindigkeit beträgt vorzugsweise mindestens das Doppelte und besonders bevorzugt mindestens das Fünffache der zweiten Abgasströmungsgeschwindigkeit.

Die Strömungsgeschwindigkeiten des Abgases sind vorzugsweise im Grenzbereich zwischen dem Auftreffbereich und dem peripheren Bereich stark unterschiedlich. Ein Strömungsverteilungsprofil hat zwischen dem Auftreffbereich und dem peripheren Bereich vorzugsweise eine steile Flanke. Vorzugsweise werden mindestens 80 Prozent der Fläche des Auftreffbereichs mit einer Strömungsgeschwindigkeit durchströmt bzw. angeströmt, die mindestens 90 Prozent der (mittleren) ersten Strömungsgeschwindigkeit beträgt. Vorzugsweise werden mindestens 80 Prozent der Fläche des peripheren Bereichs mit einer Strömungsgeschwindigkeit durchströmt bzw. angeströmt, die höchstens 110 Prozent der (mittleren) zweiten Strömungsgeschwindigkeit beträgt. Eine beschriebene Ausbildung einer Strömungsverteilung kann durch eine geeignete Gestaltung der Strömungsleitstruktur erreicht werden.

Weiterhin ist der Abgasleitungsabschnitt vorteilhaft, wenn die Auftreffstruktur ein Strömungsgleichrichter ist.

Ein Strömungsgleichrichter ist vorzugsweise durch eine Vielzahl von parallel verlaufenden Kanalstrukturen gekennzeichnet. In einer Abgasströmung, die einen Strömungsgleichrichter durchströmt, werden Verwirbelungen signifikant reduziert. Der Strömungsgleichrichter zerhackt in der Abgasströmung vorliegende Wirbel. Durch einen Strömungsgleichrichter als Auftreffstruktur wird es daher ermöglicht, dass der Abgasleitungsabschnitt eine gleichmäßige Abgasströmung bereitstellt, die mit fein zerstäubtem flüssigem Additiv oder bereits verdampftem flüssigen Additiv angereichert ist. Die Kanäle eines Strömungsgleichrichters sind vorzugsweise so lang, dass eine den Strömungsgleichrichter verlassende Abgasströmung annähernd parallele Strömungsfäden hat und/oder laminar ist.

In einer Ausführungsvariante ist der Strömungsgleichrichter konusförmig gestaltet. Ein solcher Strömungsgleichrichter weist Kanäle auf, die zumindest teilweise zusammen (aufeinander zu) oder auseinander (voneinander weg) laufen. Ein konusförmiger Strömungsgleichrichter hat typischerweise eine kleine Stirnseite und eine große Stirnseite. Besonders bevorzugt ist die kleine Stirnseite hin zu der Zugabeeinheit ausgerichtet. Weiter bevorzugt entspricht der Auftreffbereich der kleinen Stirnseite. Die Abgasströmung kann dann in dem Strömungsgleichrichter gleichgerichtet und zusätzlich aufgeweitet werden, damit die Strömung in Durchströmungsrichtung hinter dem Strömungsgleichrichter wieder über den ganzen Querschnitt einer Abgasleitung gleichmäßig verteilt ist.

Weiterhin ist der Abgasleitungsabschnitt vorteilhaft, wenn die Auftreffstruktur einen Abgasmischer umfasst.

Durch einen Abgasmischer kann eine besonders gute Verwirbelung des Abgases erfolgen. Dies kann eine besonders gute Durchmischung von flüssigem Additiv und Abgas gewährleisten, so dass nach dem Abgasleitungsabschnitt eine Abgasströmung vorliegt, in der das flüssige Additiv gleichmäßig verteilt ist. Vorzugsweise strömt die Abgasströmung die als Abgasmischer ausgebildete Auftreffstruktur gemäß der beschriebenen Strömungsverteilung an. In der als Abgasmischer ausgebildeten Auftreffstruktur wird die Abgasströmung dann verwirbelt und durchmischt, so dass die Abgasströmung die Auftreffstruktur an einer Auslassseite mit einer homogenen Verteilung von flüssigem Additiv verlässt.

In einer bevorzugten Ausführungsvariante hat die Auftreffstruktur ein Auftreffbauteil, das den Auftreffbereich bildet. Das Auftreffbauteil kann beispielsweise von mindestens einem Gitter, einem Sieb und/oder einer Platte ausgebildet sein und den Querschnitt der Abgasleitung überspannen. Der Abgasmischer kann in Strömungsrichtung hinter diesem Auftreffbauteil angeordnet sein. Der Abgasmischer kann an dem Auftreffbauteil befestigt sein.

Als Auftreffstruktur ist auch eine Kombination eines Strömungsgleichrichters und eines Abgasmischers möglich. Beispielsweise kann in Strömungsrichtung hintereinander zunächst ein Abgasmischer angeordnet sein, an dem auch der Auftreffbereich angeordnet ist. Dieser Abgasmischer bewirkt dann eine besonders gleichmäßige Verteilung des flüssigen Additivs in der Abgasströmung hinter dem Auftreffbereich. Daran kann sich ein Strömungsgleichrichter anschließen, welcher die von dem Abgasmischer erzeugten Wirbel in der Abgasströmung wieder vergleichmäßigt und eine über den gesamten Querschnitt des Abgasleitungsabschnittes gleichmäßige Strömungsverteilung erzeugt, so dass die Abgasströmung hinter dem Strömungsgleichrichter weitgehend unabhängig von dem Einfluss des Abgasmischers ist. Eine gleichmäßige Strömungsverteilung ist dabei dadurch charakterisiert, dass die Strömungsgeschwindigkeit des Abgases auf mindestens 80 Prozent der Fläche der Auftreffstruktur mindestens 90 Prozent einer mittleren Strömungsgeschwindigkeit entspricht. Auch ist möglich, dass die Auftreffstruktur in Strömungsrichtung zunächst einen Strömungsgleichrichter und anschließend einen Abgasmischer aufweist. Der Auftreffbereich ist dann an dem Strömungsgleichrichter angeordnet. Nachdem das Abgas den Strömungsgleichrichter durchströmt hat, wird es dann von dem Abgasmischer durchmischt.

Ein Abgasmischer kann ebenfalls konusförmig ausgeführt sein, wobei eine kleine Stirnseite eines konusförmigen Abgasmischers hin zu der Zugabeeinheit ausgerichtet sein sollte. Die auf den konusförmigen Abgasmischer auftreffende Abgasströmung kann dann (wie bei einem konusförmigen Strömungsgleichrichter) aufgeweitet werden, damit sie wieder über den gesamten Querschnitt einer Abgasleitung annähernd gleich verteilt ist.

Erfindungsgemäß ist der beschriebene Abgasleitungsabschnitt, wenn die Strömungsleitstruktur eine Düse ist.

Mit einer Düse kann eine Abgasströmung auf einen Auftreffbereich fokussiert werden, der wesentlich kleiner als ein Querschnitt des Abgasleitungsabschnitts ist. Eine Düse kann beispielsweise als (zumindest abschnittsweise) konusförmiges Bauteil in den Abgasleitungsabschnitt eingefügt sein. Eine Düse kann auch von einer Wand des Abgasleitungsabschnitts mit ausgebildet sein. Beispielsweise kann eine Düse durch eine abschnittsweise Verengung des Abgasleitungsabschnitts ausgebildet sein. Vorzugsweise ist eine Verengung des Abgasleitungsabschnittes, die als Düse wirkt, dadurch charakterisiert, dass der Querschnitt des Abgasleitungsabschnitts in Durchströmungsrichtung (wenigstens in einem Bereich) stetig abnimmt. In diesem Bereich wird die Abgasströmung beschleunigt. Dann folgt eine Verengung, die wie eine Drossel in der Abgasleitung wirkt. Anschließend vergrößert sich der Querschnitt sprungartig, so dass die fokussierte Abgasströmung von einem äußeren Bereich umgeben ist, in dem das Abgas nicht oder nur langsam strömt. So kann eine besonders effektive Beschleunigung und Konzentration der Abgasströmung auf einen Auftreffbereich erreicht werden. Außerdem ist kein zusätzliches Bauteil zur Bereitstellung einer Düse notwendig. Besonders vorteilhaft ist eine als Düse ausgeführte Strömungsleitstruktur, die sich zu der Zugabeeinheit hin mit einer Form verjüngt, bei der der Querschnitt der Düse
sich in Durchströmungsrichtung zunächst stark und anschließend weniger stark (abnehmend) verjüngt. Durch eine solche Düse wird eine besonders gute Fokussierung der Abgasströmung erreicht, so dass eine gewünschte Strömungsverteilung besonders präzise eingestellt werden kann. Gleichzeitig kann mit einer Düse erreicht werden, dass die über die Einströmseite eintretende Abgasströmung gerichtet und/oder beruhigt wird.

Weiterhin ist der Abgasleitungsabschnitt vorteilhaft, wenn die Strömungsleitstruktur ein Diffusor ist.

Mit einem Diffusor sind eine Erweiterung und insbesondere eine konusförmige Erweiterung des Querschnitts des Abgasleitungsabschnitts gemeint. Mit Hilfe eines Diffusors kann eine Aufweitung der Abgasströmung erreicht werden. Ein Diffusor erzeugt eine gleichmäßige Abgasströmung. Wenn ein Diffusor als Strömungsleitstruktur verwendet wird, ist der Auftreffbereich vorzugsweise auf der gesamten Querschnittsfläche einer Auftreffstruktur oder auf einem sehr großen Anteil einer Querschnittsfläche der Auftreffstruktur angeordnet. Dann existiert vorzugsweise kein peripherer Bereich oder nur ein sehr kleiner peripherer Bereich.

Ein Diffusor als Strömungsleitstruktur ist insbesondere dann vorteilhaft, wenn die Abgasströmung mit einer ungleichmäßigen Eintrittsströmungsverteilung in den Abgasleitungsabschnitt eintritt. Eine solche Eintrittsströmungsverteilung ergibt sich insbesondere dann, wenn in Durchströmungsrichtung vor der Strömungsleitstruktur eine Abwinkelung der Abgasleitung angeordnet ist. Eine Abwinkelung weist typischerweise einen Winkel auf, um den die Abgasleitung abknickt bzw. gebogen ist. Je enger der Radius der Abwinkelung ist, um so mehr wird die Abgasströmung hin zu einer Wandung der Abgasleitung abgelenkt, so dass sich typischerweise ein Bereich mit einer stark erhöhten Abgasströmungsgeschwindigkeit ergibt. Durch einen Diffusor wird die Abgasströmungsgeschwindigkeit insgesamt abgebremst. Somit bleibt der Abgasströmung auf dem Weg von der Strömungsleitstruktur hin zu der Auftreffstruktur mehr Zeit, damit sich die Abgasströmungsgeschwindigkeit über den gesamten Querschnitt der Abgasleitung angleichen kann. So kann eine besonders gleichmäßige Anströmung eines Auftreffbereichs mit einer entsprechenden Strömungsverteilung erreicht werden. Durch einen Diffusor wird eine Strömungsverteilung in dem Abgasleitungsabschnitt im Wesentlichen unabhängig von dem Winkel und dem Radius einer Abwinkelung einer Abgasleitung, die in Abgasströmungsrichtung vor dem Abgasleitungsabschnitt angeordnet ist.

In einer weiteren Ausführungsvariante erstreckt sich die Auftreffstruktur nicht über den gesamten Querschnitt des Abgasleitungsabschnitts. Die Auftreffstruktur überspannt lediglich den Auftreffbereich. Außen um den Auftreffbereich herum (im peripheren Bereich) kann die Abgasströmung die Auftreffstruktur umströmen. Die Auftreffstruktur ist dann beispielsweise mit Stützstrukturen in dem Abgasleitungsabschnitt abgestützt.

Außerdem ist es vorteilhaft, wenn die Strömungsleitstruktur einen Eintrittsdurchmesser und einen Austrittsdurchmesser aufweist, wobei zumindest der Eintrittsdurchmesser oder der Austrittsdurchmesser zwischen 50 Prozent und 90 Prozent, vorzugsweise zwischen 70 Prozent und 80 Prozent, eines Leitungsdurchmessers des Abgasleitungsabschnittes beträgt.

Der Leitungsdurchmesser des Abgasleitungsabschnittes ist vorzugsweise im Bereich der Zugabeeinheit gemessen. Eine mögliche Vergrößerung oder Verkleinerung des Leitungsdurchmessers durch eine Einbuchtung oder Ausbuchtung des Abgasleitungsabschnittes im Bereich der Zugabeeinheit ist hierbei nicht berücksichtigt. Der Leitungsdurchmesser ist vorzugsweise ein mittlerer Leitungsdurchmesser, den der Abgasleitungsabschnitt aufweist bzw. der Durchmesser einer zylindrischen Grundform des Abgasleitungsabschnittes im Bereich der Zugabeeinheit.

Die angegebenen Größenordnungen für den Eintrittsdurchmesser bzw. für den Austrittsdurchmesser sind sowohl anwendbar, wenn die Strömungsleitstruktur ein Diffusor ist, als auch, wenn die Strömungsleitstruktur eine Düse ist. Bei einer Düse liegt vorzugsweise der Austrittsdurchmesser in dem angegebenen Bereich zwischen 50 Prozent und 90 Prozent, bzw. zwischen 70 Prozent und 80 Prozent des Leitungsdurchmessers, während der Eintrittsdurchmesser dem Leitungsdurchmesser entspricht. Bei einem Diffusor liegt vorzugsweise der Eintrittsdurchmesser in dem angegebenen Bereich zwischen 50 Prozent und 90 Prozent, bzw. zwischen 70 Prozent und 80 Prozent, während der Austrittsdurchmesser dem Leitungsdurchmesser entspricht.

Weiterhin ist der Abgasleitungsabschnitt vorteilhaft, wenn die Auftreffstruktur im Auftreffbereich eine Hydrolysebeschichtung aufweist.

Vorzugsweise hat die Auftreffstruktur nur im Auftreffbereich eine Hydrolysebeschichtung, wobei beispielsweise außerhalb des Auftreffbereichs keine oder eine andere Beschichtung vorgesehen ist. Durch die Hydrolysebeschichtung im Auftreffbereich kann erreicht werden, dass flüssiges Additiv, das auf die Auftreffstruktur trifft, besonders effektiv zu Ammoniak umgesetzt wird. Im peripheren Bereich trifft (praktisch) kein flüssiges Additiv oder nur sehr wenig flüssiges Additiv auf die Auftreffstruktur, so dass dort eine Beschichtung eingespart werden könnte. Darüber hinaus wird ein Strömungswiderstand der Auftreffstruktur gegen eine Durchströmung mit Abgas verringert. Die Hydrolysebeschichtung verengt die Kanäle der Auftreffstruktur zumindest teilweise. Dies erhöht den Strömungswiderstand der Auftreffstruktur.

Ein Wabenkörper kann sowohl ein Strömungsgleichrichter als auch ein Abgasmischer sein. Zur Durchmischung können die beschriebenen Umlenkflächen in den Kanälen des Wabenkörpers ausgebildet sein. Je mehr Umlenkflächen vorgesehen sind, umso mehr wirkt ein Wabenkörper als Abgasmischer. Ein Wabenkörper mit sehr wenig Umlenkflächen und sich von einer Einströmseite zu einer Ausströmseite gerade (ohne Krümmung bzw. parallel) erstreckenden Kanälen kann als Strömungsgleichrichter wirken. Ein Wabenkörper ist eine besonders effektive Möglichkeit, einen Strömungsgleichrichter oder einen Abgasmischer zur realisieren. Ein weiteres Merkmal eines Wabenkörpers, der als Abgasmischer wirkt, sind Öffnungen, die die Kanäle des Wabenkörpers miteinander verbinden. Dies sind Öffnungen in den Kanalwänden des Wabenkörpers. Durch solche Öffnungen kann eine Durchmischung und Umverteilung der Abgasströmung über die Querschnittsfläche des Wabenkörpers erfolgen. Ein Wabenkörper ist vorzugsweise aus mindestens einer zumindest teilweise strukturierten (gewellten) metallischen Lage hergestellt, die Kanäle ausbildet, welche sich von einer Einströmseite zu einer Ausströmseite des Wabenkörpers erstrecken. Umlenkflächen können als Struktur in den metallischen Lagen des Wabenkörpers vorgesehen sein. Öffnungen zur Verbindung der Kanäle untereinander können als Öffnungen in den metallischen Lagen des Wabenkörpers ausgebildet sein.

Ein konusförmiger Strömungsgleichrichter kann als konusförmiger Wabenkörper ausgeführt sein. Eine Kombination aus einem Abgasmischer und einem Strömungsgleichrichter kann durch einen Wabenkörper bereitgestellt werden, der abschnittsweise mit Umlenkflächen und Öffnungen in den Kanalwänden und abschnittsweise mit Kanälen ohne derartige Umlenkflächen und Öffnungen ausgeführt ist.

Weiterhin ist der Abgasleitungsabschnitt vorteilhaft, wenn in Durchströmungsrichtung vor der Strömungsleitstruktur und/oder hinter der Auftreffstruktur an dem Abgasleitungsabschnitt jeweils ein Flansch angeordnet ist, mit dem der Abgasleitungsabschnitt mit weiteren Komponenten einer Abgasbehandlungsvorrichtung verbunden werden kann.

Vorzugsweise kann der Abgasleitungsabschnitt mit weiteren Abgasleitungsabschnitten der Abgasbehandlungsvorrichtung verbunden werden, um in eine Abgasbehandlungsvorrichtung integriert zu werden. In einer Ausführungsvariante ist mit einem Flansch hier eine Struktur gemeint, die eine Verschraubung mit weiteren Leitungsabschnitten ermöglicht. Ein Flansch kann aber auch von einer Kante und/oder einer Nut gebildet sein, die eine Verschweißung oder eine Verlötung mit weiteren Leitungsabschnitten ermöglichen. Ein solcher Abgasleitungsabschnitt mit Flanschen eignet sich besonders als Modulbauteil einer universellen Mischstrecke, die in verschieden gestaltete Abgasbehandlungsvorrichtungen integriert werden kann. Bei der Auslegung von weiteren Komponenten einer Abgasbehandlungsvorrichtung muss die Tatsache der Zugabe von flüssigem Additiv in dem Abgasleitungsabschnitt dann nicht berücksichtigt werden. Der Abgasleitungsabschnitt stellt an seiner Ausströmseite eine Abgasströmung bereit, die das flüssige Additiv in fein zerstäubter Form und/oder in gasförmiger Form enthält.

Weiter wird auch ein Kraftfahrzeug vorgeschlagen, aufweisend eine Verbrennungskraftmaschine und eine Abgasbehandlungsvorrichtung zur Reinigung der Abgase der Verbrennungskraftmaschine, wobei die Abgasbehandlungsvorrichtung einen hier beschriebenen Abgasleitungsabschnitt aufweist, mit dem der Abgasbehandlungsvorrichtung ein flüssiges Additiv zugeführt werden kann, und in der Abgasbehandlungsvorrichtung und in einer Durchströmungsrichtung der Abgase durch die Abgasbehandlungsvorrichtung hinter dem Abgasleitungsabschnitt ein SCR-Katalysator vorgesehen ist.

An dem SCR-Katalysator kann mit dem flüssigen Additiv das Verfahren der selektiven katalytischen Reduktion zur Abgasreinigung durchgeführt werden. An dem Abgasleitungsabschnitt ist vorzugsweise ein (einzelner) Injektor vorgesehen, welcher eine portionierte Zugabe des flüssigen Additivs zu dem Abgasleitungsabschnitt übernimmt. Der Injektor kann Bestandteil der Zugabeinheit des Abgasleitungsabschnittes sein und der Injektor wird von einer Fördereinheit zur Förderung des flüssigen Additivs mit flüssigem Additiv versorgt. Die Fördereinheit entnimmt das flüssige Additiv aus einem Tank, in dem das flüssige Additiv gespeichert ist und stellt es über eine Leitung dem Injektor bereit.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ausführungsvariante eines Abgasleitungsabschnitts,
- Fig. 2:: eine zweite Ausführungsvariante eines Abgasleitungsabschnitts,
- Fig. 3:: eine dritte Ausführungsvariante eines Abgasleitungsabschnitts,
- Fig. 4:: eine vierte Ausführungsvariante eines Abgasleitungsabschnitts,
- Fig. 5:: eine fünfte Ausführungsvariante eines Abgasleitungsabschnitts,
- Fig. 6:: eine sechste Ausführungsvariante eines Abgasleitungsabschnitts,
- Fig. 7:: eine Abgasströmungsverteilung, die mit einem beschriebenen Abgasleitungsabschnitt erreicht werden kann, und
- Fig. 8:: ein Kraftfahrzeug, aufweisend einen beschriebenen Abgasleitungsabschnitt.

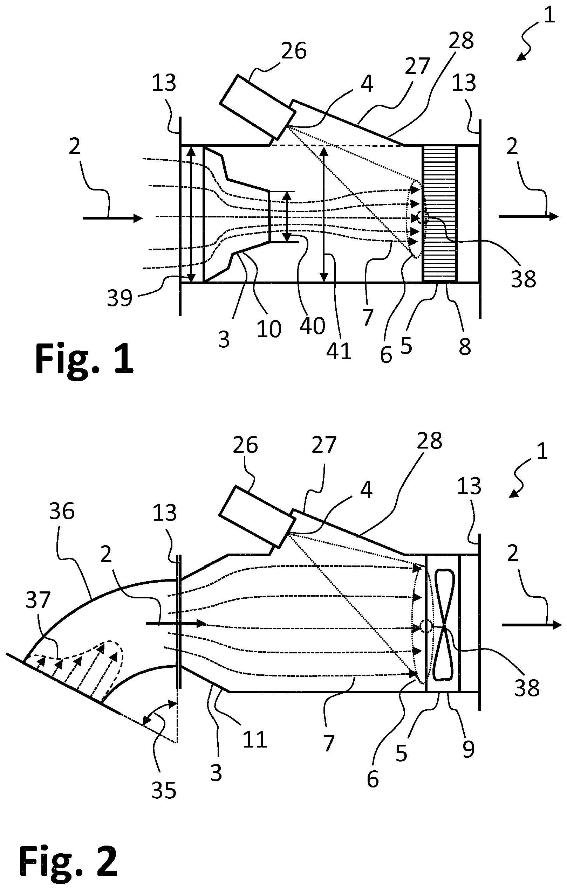

In den Fig. 1 bis 6 ist jeweils ein Abgasleitungsabschnitt 1 dargestellt, der von einer Abgasströmung mit einer Durchströmungsrichtung 2 durchströmt werden kann. Der Abgasleitungsabschnitt 1 hat jeweils eine im Wesentlichen zylindrische Grundform, die von einer Außenwand 28 des Abgasleitungsabschnittes 1 gebildet wird. In Durchströmungsrichtung hintereinander befindet sich an dem Abgasleitungsabschnitt 1 zunächst eine Strömungsleitstruktur 3, anschließend eine Zugabeeinheit 4 und dann eine Auftreffstruktur 5. Jeweils dargestellt ist, dass die Abgasleitungsabschnitte 1 Flansche 12 haben, mit denen die Abgasleitungsabschnitte an weitere Komponenten einer hier nicht dargestellten Abgasbehandlungsvorrichtung angeschlossen werden können. Die Flansche 12 sind beispielhaft als hervorstehende Kragen ausgebildet, die beispielsweise eine Verschraubung der Abgasleitungsabschnitte 1 mit weiteren Abgasleitungsabschnitten ermöglichen. Die Zugabeinheit 4 führt das flüssige Additiv dem Abgasleitungsabschnitt 1 jeweils so zu, dass es auf der Auftreffstruktur 5 in einem Auftreffbereich 6 auftrifft. Aufgrund der Strömungsleitstruktur 3 stellt sich eine Strömungsverteilung 7 mit einem Schwerpunkt 38 ein. Der Schwerpunkt 38 liegt in dem Auftreffbereich 6. Vorzugsweise entspricht die Strömungsverteilung 7 dem Auftreffbereich 6. Die Zugabeinheit 4 umfasst jeweils einen (einzelnen) Injektor 26, der das flüssige Additiv bedarfsgerecht portioniert bereitstellt.

In Fig. 1 ist beispielhaft bezeichnet, dass der Abgasleitungsabschnitt 1 einen Leitungsdurchmesser 41 aufweist. Die Strömungsleitstruktur 3 hat einen Eintrittsdurchmesser 39 und einen Austrittsdurchmesser 40. Im vorliegenden Fall entspricht der Eintrittsdurchmesser 39 dem Leitungsdurchmesser 41 während der Austrittsdurchmesser 40 kleiner ist als der Leitungsdurchmesser 41. Dies ermöglicht eine Fokussierung und eine Beschleunigung einer Abgasströmung, die die Strömungsleitstruktur 3 passiert. Die Angaben zum Leitungsdurchmesser 41, zum Eintrittsdurchmesser 39 und zum Austrittsdurchmesser 40 können auf die in den Figuren 2 bis 5 dargestellten weiteren Ausführungsvarianten eines Abgasleitungsabschnittes 1 übertragen werden.

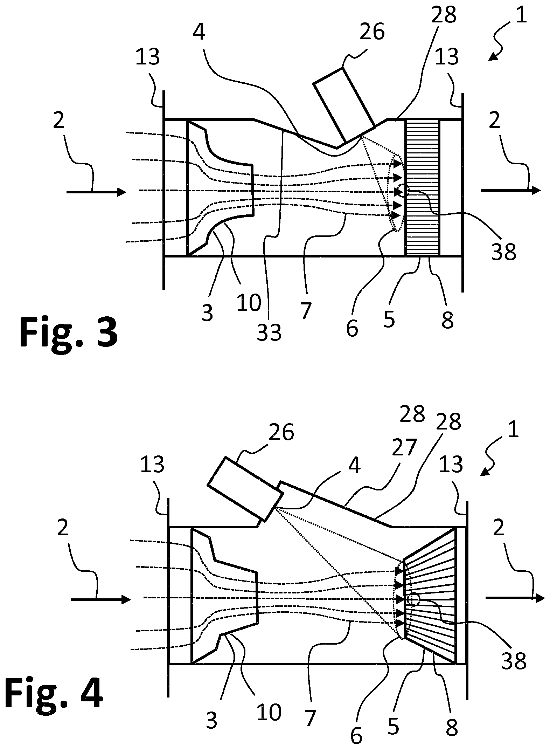

Die Zugabeeinheit 4 bei den Ausführungsvarianten gemäß den Fig. 1, 2, 4, 5 und 6 ist jeweils an einer Ausbuchtung 27 des Abgasleitungsabschnittes 1 angeordnet. Bei der Ausführungsvariante gemäß Fig. 3 ist die Zugabeeinheit an einer Einbuchtung 33 des Abgasleitungsabschnittes 1 angeordnet.

Bei der Ausführungsvariante gemäß Fig. 1 ist die Strömungsleitstruktur 3 als Düse 10 ausgebildet. Die Auftreffstruktur 5 ist dort als eine Art Strömungsgleichrichter 8 ausgebildet.

Bei der nicht erfindungsgemäßen Ausführungsvariante gemäß Fig. 2 ist die Strömungsleitstruktur 3 als Diffusor 11 ausgebildet. Die Auftreffstruktur 5 ist als eine Art Abgasmischer 9 ausgebildet. In Durchströmungsrichtung 2 vor dem Diffusor 11 schließt sich eine Abwinkelung 36 an den Abgasleitungsabschnitt 1 an. Die Abwinkelung 36 hat einen Winkel 35 in dem eine Abgasleitung im Bereich der Abwinkelung 36 abknickt. Ein Diffusor 11 als Strömungsleitstruktur 3 ist insbesondere dann vorteilhaft, wenn die Abgasströmung mit einer ungleichmäßigen Eintrittsströmungsverteilung 37 in den Abgasleitungsabschnitt 1 eintritt. Eine ungleichmäßige Eintrittsströmungsverteilung 37 tritt besonders dann auf, wenn in Durchströmungsrichtung vor der Strömungsleitstruktur 3 eine Abwicklung der Abgasleitung angeordnet ist.

Die Ausführungsvariante gemäß Fig. 3 entspricht im Wesentlichen der Ausführungsvariante gemäß Fig. 1, wobei allerdings die Zugabeeinheit nicht in einer Ausbuchtung 27 sondern in einer Einbuchtung 33 angeordnet ist. Darüber hinaus verjüngt sich die als Düse 10 ausgeführte Strömungsleitstruktur 3 zu der Zugabeeinheit 4 hin mit einer Form, bei der der Querschnitt der Düse 10 sich in Durchströmungsrichtung 2 zunächst stark und anschließend weniger (abnehmend) verjüngt.

Bei der Ausführungsvariante gemäß Fig. 4 ist die Auftreffstruktur 5 als konusförmiger Strömungsgleichrichter 8 ausgebildet.

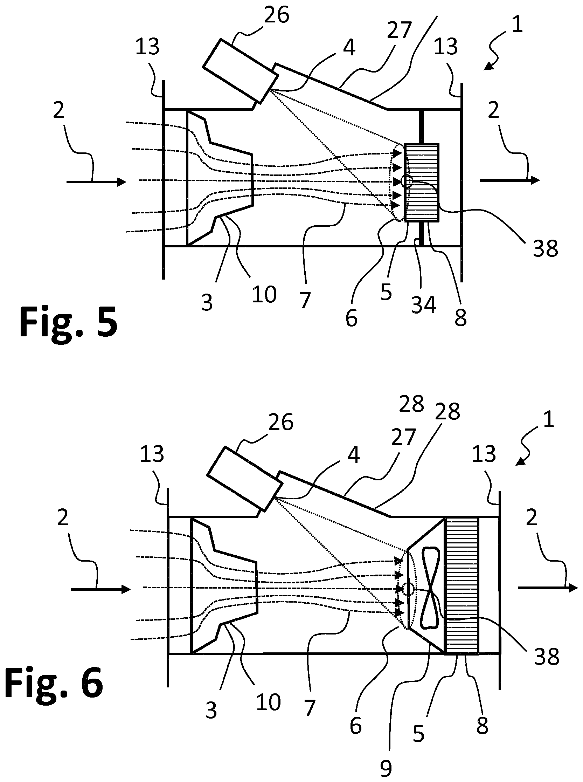

Bei der Ausführungsvariante gemäß Fig. 5 ist die Auftreffstruktur 5 nur im Auftreffbereich 6 angeordnet und darum herum für das Abgas (frei) umströmbar. Die Auftreffstruktur 5 ist mit Stützstrukturen 34 in der Außenwand 28 des Abgasleitungsabschnittes 1 abgestützt.

Bei der Ausführungsvariante gemäß Fig. 6 ist die Auftreffstruktur 5 von einem Abgasmischer 9 und von einem Strömungsgleichrichter 8 gebildet. Der Abgasmischer 9 ist dabei konusartig ausgeführt, damit die Abgasströmung ausgehend von dem Auftreffbereich 6 wieder erweitert wird und den Abgasleitungsabschnitt 1 vollständig ausfüllt.

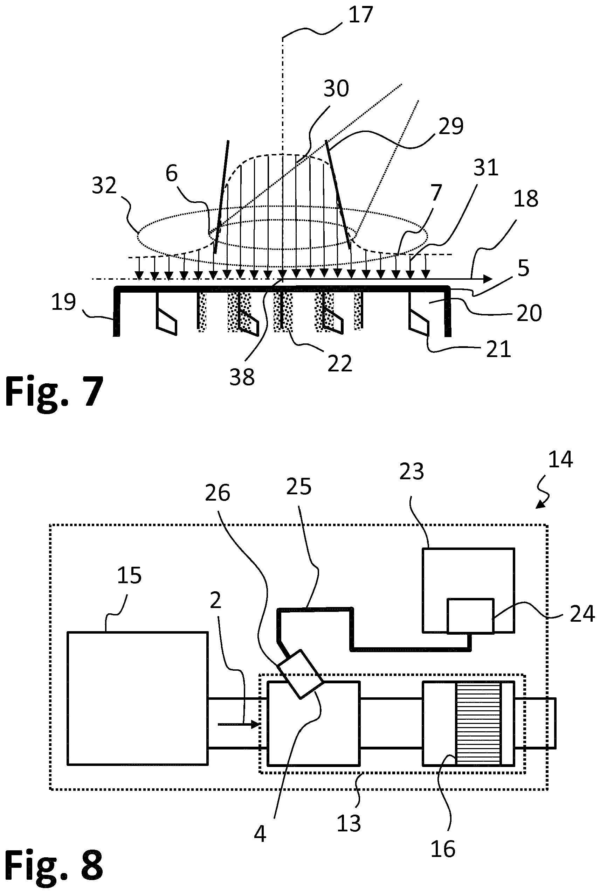

In Fig. 7 wird eine Strömungsverteilung 7 der Abgasströmung schematisch dargestellt. Zu erkennen ist eine Leitungsachse 17 eines Abgasleitungsabschnitts, der hier nicht dargestellt ist. Die Leitungsachse 17 ist eine zentrale Achse des Abgasleitungsabschnittes. Außerdem zu erkennen ist eine radiale Richtung 18, die sich ausgehend von der Leitungsachse 17 nach außen erstreckt. Die Strömungsverteilung 7 hat in dem hier schematisch dargestellten Auftreffbereich 6 eine erste Abgasströmungsgeschwindigkeit 30 und in einem außen um den Auftreffbereich 6 herum angeordneten peripheren Bereich 32 eine zweite Abgasströmungsgeschwindigkeit 31. Der Auftreffbereich 6 und der periphere Bereich 32 bilden zusammen eine Fläche einer Auftreffstruktur 5. Die erste Abgasströmungsgeschwindigkeit 30 ist vorzugsweise signifikant größer als die zweite Abgasströmungsgeschwindigkeit 31. Zwischen dem peripheren Bereich 32 und dem Auftreffbereich 6 ändert sich die Abgasströmungsgeschwindigkeit von der zweiten Abgasströmungsgeschwindigkeit 31 zu der ersten Abgasströmungsgeschwindigkeit 30 vorzugsweise mit einer steilen Flanke 29, so dass die Strömungsverteilung 7 klar erkennbar dem Auftreffbereich 6 entspricht.

In Fig. 7 ist zudem dargestellt, dass die Auftreffstruktur 5 ein Wabenkörper 19 mit Kanälen 20 sein kann. Auch ist veranschaulicht, dass in den Kanälen 20 Umlenkflächen 21 angeordnet sein können. Durch solche Umlenkflächen 21 wird die Abgasströmung gezielt beeinflusst, die den Wabenkörper 19 durchströmt. Ebenfalls ist schematisch dargestellt, dass der Wabenkörper 19 im Auftreffbereich 6 mit einer Hydrolysebeschichtung 22 versehen ist, während im peripheren Bereich 32 keine Hydrolysebeschichtung (bzw. keine Beschichtung) vorgesehen ist. In Fig. 7 ist lediglich ein Abschnitt des Wabenkörpers 19 dargestellt, der die Auftreffstruktur 5 ausbildet. Der Wabenkörper 19 kann sich in Abgasströmungsrichtung noch weiter fortsetzen.

Fig. 8 zeigt ein Kraftfahrzeug 14, aufweisend eine Verbrennungskraftmaschine 15 und eine Abgasbehandlungsvorrichtung 13 zur Reinigung der Abgase der Verbrennungskraftmaschine 15. In der Abgasbehandlungsvorrichtung 13 kann ein beschriebener Abgasleitungsabschnitt 1 zur Zugabe eines flüssigen Additivs und ein SCR-Katalysator 16 angeordnet sein. Der Abgasleitungsabschnitt 1 weist eine Zugabeeinheit 4 auf, die einen Injektor 26 umfasst. Der Injektor 26 wird mit flüssigem Additiv aus einem Tank 23 versorgt, wobei das flüssige Additiv aus dem Tank 23 mit einer Fördereinheit 24 über eine Leitung 25 zu dem Injektor 26 gefördert wird.

Offensichtlich ist für den Fachmann, dass die in den Figuren veranschaulichten technischen Merkmale auch extrahierbar und/oder mit technischen Merkmalen anderer Figuren kombinierbar sind. Vorsorglich wird hier darauf hingewiesen, dass die in den einzelnen Figuren gezeigten Merkmalskombinationen zwar bevorzugt sind, aber gleichwohl nicht zwingend.

### Bezugszeichenliste

- 1: Abgasleitungsabschnitt
- 2: Durchströmungsrichtung
- 3: Strömungsleitstruktur
- 4: Zugabeeinheit
- 5: Auftreffstruktur
- 6: Auftreffbereich
- 7: Strömungsverteilung
- 8: Strömungsgleichrichter
- 9: Abgasmischer
- 10: Düse
- 11: Diffusor
- 12: Flansch
- 13: Abgasbehandlungsvorrichtung
- 14: Kraftfahrzeug
- 15: Verbrennungskraftmaschine
- 16: SCR-Katalysator
- 17: Leitungsachse
- 18: radiale Richtung
- 19: Wabenkörper
- 20: Kanal
- 21: Umlenkfläche
- 22: Hydrolysebeschichtung
- 23: Tank
- 24: Fördereinheit
- 25: Leitung
- 26: Injektor
- 27: Ausbuchtung
- 28: Außenwand
- 29: Flanke
- 30: erste Abgasströmungsgeschwindigkeit
- 31: zweite Abgasströmungsgeschwindigkeit
- 32: peripherer Bereich
- 33: Einbuchtung
- 34: Stützstruktur
- 35: Winkel
- 36: Abwinkelung
- 37: Eintrittsströmungsverteilung
- 38: Schwerpunkt
- 39: Eintrittsdurchmesser
- 40: Austrittsaustrittsdurchmesser
- 41: Leitungsdurchmesser

## Patentansprüche

1. Abgasleitungsabschnitt (1), der von einem Abgas durchströmt werden kann, wobei entlang einer Durchströmungsrichtung (2) hintereinander eine Strömungsleitstruktur (3), eine Zugabeeinheit (4) zur Zufuhr eines flüssigen Additivs zu dem Abgas und eine durchströmbare Auftreffstruktur (5) angeordnet sind, wobei die Strömungsleitstruktur (3) eine Düse (10) ist, wobei die Zugabeeinheit (4) an einer seitlichen Öffnung des Abgasleitungsabschnitts (1) angeordnet ist, wobei die Zugabeeinheit (4) und die Strömungsleitstruktur (3) so angeordnet und ausgebildet sind, dass ein Auftreffbereich (6) des flüssigen Additivs auf der Auftreffstruktur (5) mit dem Schwerpunkt (38) einer Strömungsverteilung (7) des die Auftreffstruktur (5) durchströmenden Abgases überlappt, wobei eine Achse eines mittels der Zugabeeinheit (4) erzeugbaren Sprühkegels auf die Auftreffstruktur (5) hin ausgerichtet ist, **dadurch gekennzeichnet, dass** die Auftreffstruktur (5) ein Wabenkörper (19) mit für das Abgas durchströmbaren Kanälen (20) ist, wobei in den Kanälen (20) Umlenkflächen (21) zur Beeinflussung einer Abgasströmung vorgesehen sind.

2. Abgasleitungsabschnitt (1) nach Patentanspruch 1, wobei die Zugabeeinheit (4) und die Strömungsleitstruktur (3) so angeordnet und ausgebildet sind, dass der Auftreffbereich (6) der Strömungsverteilung (7) entspricht.

3. Abgasleitungsabschnitt (1) nach einem der vorhergehenden Patentansprüche, wobei die Strömungsleitstruktur (3) einen Eintrittsdurchmesser (39) und einen Austrittsdurchmesser (40) aufweist, wobei zumindest der Eintrittsdurchmesser (39) oder der Austrittsdurchmesser (40) zwischen 50 Prozent und 90 Prozent eines Leitungsdurchmessers (41) des Abgasleitungsabschnittes (1) beträgt.

4. Abgasleitungsabschnitt (1) nach einem der vorhergehenden Patentansprüche, wobei die Auftreffstruktur (5) im Auftreffbereich (6) eine Hydrolysebeschichtung (22) aufweist.

5. Abgasleitungsabschnitt (1) nach einem der vorhergehenden Patentansprüche, wobei in Durchströmungsrichtung (2) vor der Strömungsleitstruktur (3) und hinter der Auftreffstruktur (5) an dem Abgasleitungsabschnitt (1) jeweils ein Flansch (12) angeordnet ist, mit denen der Abgasleitungsabschnitt (1) mit weiteren Komponenten einer Abgasbehandlungsvorrichtung (13) verbunden werden kann.

6. Abgasleitungsabschnitt (1) nach einem der vorhergehenden Patentansprüche, wobei die Zugabeeinheit (4) einen Injektor umfasst.

7. Abgasleitungsabschnitt (1) nach einem der vorhergehenden Patentansprüche, wobei der Auftreffbereich (6) von einer Außenwand (28) des Abgasleitungsabschnitts (1) beabstandet ist.

8. Abgasleitungsabschnitt (1) nach einem der vorhergehenden Patentansprüche, wobei der Schwerpunkt des Auftreffbereichs (6) und der Schwerpunkt der Strömungsverteilung (7) an der Auftreffstruktur (5) übereinander liegen.

9. Abgasleitungsabschnitt (1) nach einem der vorhergehenden Patentansprüche, wobei der Schwerpunkt des Auftreffbereichs (6) und der Schwerpunkt der Strömungsverteilung (7) einen Abstand von weniger als 10 mm zueinander aufweisen.

10. Abgasleitungsabschnitt (1) nach einem der vorhergehenden Patentansprüche, wobei der Auftreffbereich (6) mit einer mittleren ersten Abgasströmungsgeschwindigkeit (30) angeströmt wird, die mindestens doppelt so groß ist, wie eine mittlere zweite Abgasströmungsgeschwindigkeit (31), mit der das Abgas einen den Auftreffbereich (6) umgebenden peripheren Bereich (32) der Auftreffstruktur (5) durchströmt.

11. Kraftfahrzeug (14), aufweisend eine Verbrennungskraftmaschine (15) und eine Abgasbehandlungsvorrichtung (13) zur Reinigung der Abgase der Verbrennungskraftmaschine (15), wobei die Abgasbehandlungsvorrichtung (13) einen Abgasleitungsabschnitt (1) nach einem der vorhergehenden Patentansprüche aufweist, mit dem der Abgasbehandlungsvorrichtung (13) ein flüssiges Additiv zugeführt werden kann und in einer Durchströmungsrichtung (2) der Abgase durch die Abgasbehandlungsvorrichtung (13) hinter dem Abgasleitungsabschnitt (1) in der Abgasbehandlungsvorrichtung (13) ein SCR-Katalysator (16) vorgesehen ist.

## Claims

1. Exhaust gas line section (1) which can be flowed through by an exhaust gas, a flow guiding structure (3), a metering unit (4) for feeding a liquid additive to the exhaust gas, and an impingement structure (5), through which flow can pass, being arranged behind one another along a throughflow direction (2), the flow guiding structure (3) being a nozzle (10), the metering unit (4) being arranged at a side opening of the exhaust gas line section (1), the metering unit (4) and the flow guiding structure (3) being arranged and configured in such a way that an impingement region (6) of the liquid additive on the impingement structure (5) overlaps with the centroid (38) of a flow distribution (7) of the exhaust gas which flows through the impingement structure (5), an axis of a spray cone that can be generated by means of the metering unit (4) being oriented toward the impingement structure (5), **characterized in that** the impingement structure (5) is a honeycomb body (19) with ducts (20), through which the exhaust gas can flow, deflection faces (21) for influencing an exhaust gas flow being provided in the ducts (20).

2. Exhaust gas line section (1) according to Patent Claim 1, the metering unit (4) and the flow guiding structure (3) being arranged and configured in such a way that the impingement region (6) corresponds to the flow distribution (7).

3. The exhaust gas line section (1) according to one of the preceding patent claims, the flow guiding structure (3) having an inlet diameter (39) and an outlet diameter (40), at least the inlet diameter (39) or the outlet diameter (40) being between 50 percent and 90 percent of a line diameter (41) of the exhaust gas line section (1).

4. Exhaust gas line section (1) according to one of the preceding patent claims, the impingement structure (5) having a hydrolysis coating (22) in the impingement region (6).

5. Exhaust gas line section (1) according to one of the preceding patent claims, in each case one flange (12) being arranged on the exhaust gas line section (1) upstream of the flow guiding structure (3) and downstream of the impingement structure (5) in the throughflow direction (2), by way of which flanges (12) the exhaust gas line section (1) can be connected to further components of an exhaust gas treatment device (13).

6. Exhaust gas line section (1) according to one of the preceding patent claims, the metering unit (4) comprising an injector.

7. Exhaust gas line section (1) according to one of the preceding patent claims, the impingement region (6) being spaced apart from an outer wall (28) of the exhaust gas line section (1).

8. Exhaust gas line section (1) according to one of the preceding patent claims, the centroid of the impingement region (6) and the centroid of the flow distribution (7) lie above one another on the impingement structure (5).

9. Exhaust gas line section (1) according to one of the preceding patent claims, the centroid of the impingement region (6) and the centroid of the flow distribution (7) being at a spacing from one another of less than 10 mm.

10. Exhaust gas line section (1) according to one of the preceding patent claims, the impingement region (6) being flowed onto at a mean first exhaust gas flow speed (30) which is at least twice as high as a mean second exhaust gas flow speed (31), at which the exhaust gas flows through a peripheral region (32) of the impingement structure (5), which peripheral region (32) surrounds the impingement region (6).

11. Motor vehicle (14), having an internal combustion engine (15) and an exhaust gas treatment device (13) for purifying the exhaust gases of the internal combustion engine (15), the exhaust gas treatment device (13) having an exhaust gas line section (1) according to one of the preceding patent claims, by way of which exhaust gas line section (1) a liquid additive can be fed to the exhaust gas treatment device (13), and an SCR catalytic converter (16) being provided downstream of the exhaust gas line section (1) in the exhaust gas treatment device (13) in a throughflow direction (2) of the exhaust gases through the exhaust gas treatment device (13).

## Revendications

1. Section de conduite de gaz d'échappement (1) qui peut être parcourue par un gaz d'échappement, dans laquelle une structure de guidage d'écoulement (3), une unité d'alimentation (4) pour l'introduction d'un additif fluide dans le gaz d'échappement et une structure d'impact (5) pouvant être parcourue par l'écoulement sont disposées le long d'une direction d'écoulement (2) les unes derrière les autres, la structure de guidage d'écoulement (3) étant une buse (10), l'unité d'alimentation (4) étant disposée au niveau d'une ouverture latérale de la section de conduite de gaz d'échappement (1), l'unité d'alimentation (4) et la structure de guidage d'écoulement (3) étant disposées et réalisées de telle sorte qu'une région d'impact (6) de l'additif fluide sur la structure d'impact (5) chevauche le centre de gravité (38) d'une distribution d'écoulement (7) du gaz d'échappement s'écoulant à travers la structure d'impact (5), un axe d'un cône de pulvérisation pouvant être généré au moyen de l'unité d'alimentation (4) étant orienté vers la structure d'impact (5), **caractérisée en ce que** la structure d'impact (5) est un corps en nid d'abeilles (19) avec des canaux (20) pouvant être parcourus par le gaz d'échappement, des surfaces de déflection (21) étant prévues dans les canaux (20) pour influencer un écoulement de gaz d'échappement.

2. Section de conduite de gaz d'échappement (1) selon la revendication 1, dans laquelle l'unité d'alimentation (4) et la structure de guidage d'écoulement (3) sont disposées et réalisées de telle sorte que la région d'impact (6) corresponde à la distribution d'écoulement (7).

3. Section de conduite de gaz d'échappement (1) selon l'une quelconque des revendications précédentes, dans laquelle la structure de guidage d'écoulement (3) présente un diamètre d'entrée (39) et un diamètre de sortie (40), au moins le diamètre d'entrée (39) ou le diamètre de sortie (40) représentant entre 50 % et 90 % d'un diamètre de conduite (41) de la section de conduite de gaz d'échappement (1).

4. Section de conduite de gaz d'échappement (1) selon l'une quelconque des revendications précédentes, dans laquelle la structure d'impact (5) dans la région d'impact (6) présente un revêtement par hydrolyse (22).

5. Section de conduite de gaz d'échappement (1) selon l'une quelconque des revendications précédentes, dans laquelle une bride (12) est à chaque fois disposée dans la direction d'écoulement (2) avant la structure de guidage d'écoulement (3) et derrière la structure d'impact (5) au niveau de la section de conduite de gaz d'échappement (1), avec lesquelles brides la section de conduite de gaz d'échappement (1) peut être reliée à des composants supplémentaires d'un dispositif de traitement de gaz d'échappement (13).

6. Section de conduite de gaz d'échappement (1) selon l'une quelconque des revendications précédentes, dans laquelle l'unité d'alimentation (4) comprend un injecteur.

7. Section de conduite de gaz d'échappement (1) selon l'une quelconque des revendications précédentes, dans laquelle la région d'impact (6) est espacée d'une paroi extérieure (28) de la section de conduite de gaz d'échappement (1).

8. Section de conduite de gaz d'échappement (1) selon l'une quelconque des revendications précédentes, dans laquelle le centre de gravité de la région d'impact (6) et le centre de gravité de la distribution d'écoulement (7) sur la structure d'impact (5) sont superposés.

9. Section de conduite de gaz d'échappement (1) selon l'une quelconque des revendications précédentes, dans laquelle le centre de gravité de la région d'impact (6) et le centre de gravité de la distribution d'écoulement (7) présentent un espacement l'un de l'autre inférieur à 10 mm.

10. Section de conduite de gaz d'échappement (1) selon l'une quelconque des revendications précédentes, dans laquelle la région d'impact (6) est heurtée par l'écoulement avec une première vitesse d'écoulement de gaz d'échappement moyenne (30) qui est au moins deux fois plus grande qu'une deuxième vitesse d'écoulement de gaz d'échappement moyenne (31) avec laquelle le gaz d'échappement parcourt une région périphérique (32) de la structure d'impact (5) entourant la région d'impact (6).

11. Véhicule automobile (14), présentant un moteur à combustion interne (15) et un dispositif de traitement des gaz d'échappement (13) pour la purification de gaz d'échappement du moteur à combustion interne (15), le dispositif de traitement de gaz d'échappement (13) présentant une section de conduite de gaz d'échappement (1) selon l'une quelconque des revendications précédentes, avec laquelle le dispositif de traitement de gaz d'échappement (13) peut être alimenté en additif fluide, et un catalyseur à RCS (16) étant prévu dans le dispositif de traitement de gaz d'échappement (13) derrière la section de conduite de gaz d'échappement (1) dans une direction d'écoulement (2) des gaz d'échappement à travers le dispositif de traitement de gaz d'échappement (13).
